# EUROPÄISCHE PATENTSCHRIFT

(11) **EP 1 197 412 B1**
(45) Veröffentlichungstag und Bekanntmachung des Hinweises auf die Patenterteilung: **09.02.2005**
(21) Anmeldenummer: 01124679.0
(22) Anmeldetag: 10.10.2001
(51) Int. Cl.: B61C 9/52, B61C 9/50, B61C 9/44

(54) **Antriebseinheit für Schienenfahrzeuge**
Drive unit for railway vehicles
Unité d'entraînement pour véhicules ferroviaires

(30) Priorität: 13.10.2000 DE 10050757
(43) Veröffentlichungstag der Anmeldung: 17.04.2002
(73) Patentinhaber: ZF FRIEDRICHSHAFEN Aktiengesellschaft, 88038 Friedrichshafen (DE)
(72) Erfinder: Sacher, Christoph, 88074 Meckenbeuren (DE)

(56) Entgegenhaltungen:
- EP-A- 0 132 236
- EP-A- 0 441 225
- DE-A- 2 644 414
- GB-A- 600 389

## Beschreibung

Die Erfindung betrifft eine Antriebseinheit für Schienenfahrzeuge gemäß dem Oberbegriff des Patentanspruchs 1.

Antriebseinheiten für Schienenfahrzeuge enthalten üblicherweise einen Elektromotor, ein Getriebe und bei abgefederten Antrieben, eine Kupplung.

Kupplungen zum Übertragen des Drehmomentes werden insbesondere zum Verbinden einer treibenden mit einer getriebenen Welle verwendet, für den Fall, dass zwischen den beiden Wellen achsparallele, axiale oder winkelige Verlagerungen auftreten, die von der Kupplung ausgeglichen und abgefedert werden müssen. Dies ist insbesondere bei Schienenfahrzeugen der Fall.

Für einen vollabgefederten Achsantrieb für Schienenfahrzeuge können aufgrund des verbleibenden Bauraumes für das Getriebe einschließlich Kupplung zur Achse die herkömmlichen Kupplungskonzepte nicht mehr geeignet sein.

Dies kann insbesondere der Fall sein, wenn der Antrieb an der Außenseite des Rades angeordnet werden soll und kein direkter Zugang zum Rad besteht, weil das Achslager ebenfalls auf der Außenseite des Rades angeordnet ist.

Aus der EP 0 878 368 A1 ist eine Antriebseinheit für Schienenfahrzeuge bekannt, mit einem am Fahrzeugrahmen oder am Fahrwerk aufgehängten Elektromotor, einem Getriebe und einer Kupplung, wobei die Radsatzwelle der beiden Treibräder durch eine Hohlwelle geführt ist und wobei die Kupplung zwischen der Radsatzwelle und dem Getriebe angeordnet ist. In diesem Fall wird zum Verbinden der getriebenen mit der treibenden Welle zwischen dem Getriebe und der Hohlwelle ein erster Teil und zwischen der Hohlwelle und dem Radsatz ein zweiter Teil einer Bogenzahnkupplung verwendet.

Diese Konstruktion weist jedoch den Nachteil auf, dass die Verzahnung der Bogenzahnkupplung eine separate Schmierung und Abdichtung erfordert.

Des weiteren erweisen sich der Schmiermittelaustausch sowie die erzielte Wärmeabfuhr bei hoher Belastung als gering.

Der vorliegenden Erfindung liegt daher die Aufgabe zugrunde, ausgehend von dem erwähnten Stand der Technik, eine Antriebseinheit für Schienenfahrzeuge und insbesondere eine Kupplungsanordnung anzugeben, derart, dass der Achsantrieb eines Schienenfahrzeugs voll abgefedert wird bei gleichzeitiger Einsparung von Bauraum für ein kardanisch wirkendes Kupplungssystem.

Außerdem soll die erfindungsgemäße Konstruktion einen verbesserten Schmiermittelkreislauf sowie eine verbesserte Wärmeabfuhr aufweisen.

Zudem soll die Robustheit der Kupplung erhöht werden, so dass größere Belastungen möglich sind.

Diese Aufgabe wird durch die Merkmale des Patentanspruchs 1 gelöst. Weitere Ausgestaltungen und Varianten gehen aus den Unteransprüchen hervor.

Demnach wird vorgeschlagen, die Antriebseinheit für Schienenfahrzeuge derart auszubilden, dass im Bereich des Abtriebszahnrades des Getriebes und dessen Schmierölkreislaufs ein erster Teil eines Kupplungssystems in Form einer Bogenzahnkupplung vorgesehen ist und dass zwischen dem Getriebe und dem Radsatz ein abtriebsseitiger zweiter Teil des Kupplungssystems vorgesehen ist.

Der zweite Teil des Kupplungssystems ist bevorzugterweise gummielastisch ausgebildet.

Die erfindungsgemäße Konstruktion basiert auf der Tatsache, dass aufgrund der Breite des Zahnrades, das ohnehin vorhanden ist, dieser Bauraum für die Integration des ersten Teiles des Kupplungssystems - der Zahnkupplung - zur Verfügung steht, sowie dass das Schmiermittel des Getriebes ebenfalls schon vorhanden ist.

Da der Durchmesser des Zahnrades relativ groß ist, kann der Durchmesser der Kupplungsverzahnung erfindungsgemäß ebenfalls entsprechend groß dimensioniert werden. Dadurch ist die Belastung der Zahnflanken aus der Umfangskraft relativ niedrig.

Durch die erfindungsgemäße Lösung, bei der - wie bereits erläutert - die getriebeseitige Kupplungsverzahnung im Getriebeölraum erfolgt, wird durch den Entfall des Dichtsystemes an der Außenseite des Getriebes weiterer Bauraum - insbesondere bei seitlicher Anordnung des Getriebes - hinsichtlich minimaler Gesamtbreite gewonnen.

Ein weiterer Vorteil dieser Lösung besteht darin, dass die Schmierung der getriebeseitigen Kupplungsverzahnung in die Schmierung des Getriebes integriert wird, was sowohl eine zuverlässige Schmierung als auch eine hohe Wärmeabfuhr zur Folge hat, wodurch eine hohe Betriebssicherheit und Lebensdauer der Kupplungsverzahnung erzielt wird.

Durch die Kombination mit einem außerhalb des Getriebes angeordneten zweiten Teil des Kupplungssystems, beispielsweise einer Gummigelenkkupplung, bekommt man ein kardanisch wirkendes Kupplungssystem mit entsprechendem Abstand der beiden Kupplungsebenen und somit entsprechender Verlagerungsfähigkeit der Achse zum Getriebe. Die Baubreite des Gesamtsystems (Getriebe und Kupplung) ist, wie bereits erläutert, sehr gering.

Im folgenden wird die Erfindung anhand der beigefügten Zeichnung näher erläutert.
In diesen stellen dar:
- Fig. 1: eine Darstellung einer bevorzugten Ausführungsform der erfindungsgemäßen Antriebseinheit,
- Fig. 2: eine detaillierte Darstellung der erfindungsgemäßen Kupplungsanordnung und
- Fig. 3: eine Darstellung einer weiteren Ausführungsform, bei der die Antriebseinheit innerhalb der Räder angeordnet ist.

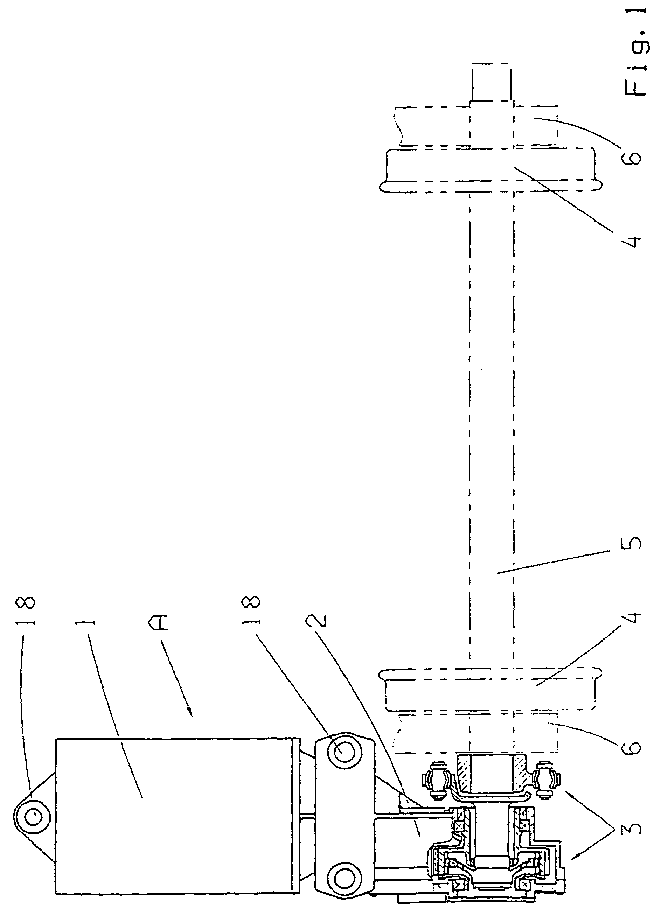

Eine bevorzugte Ausführungsform ist in Fig. 1 dargestellt. Hierbei ist Antriebseinheit A an der Außenseite des Radsatzes angeordnet und mittels Befestigungseinrichtungen 18 mit dem Drehgestell 6 verbunden. Die Antriebseinheit besteht aus einem Elektromotor 1, einem Getriebe 2 und einem Kupplungssystem 3 und treibt den Radsatz an, der die Radsatzwelle 5 und die Treibräder 4 enthält.

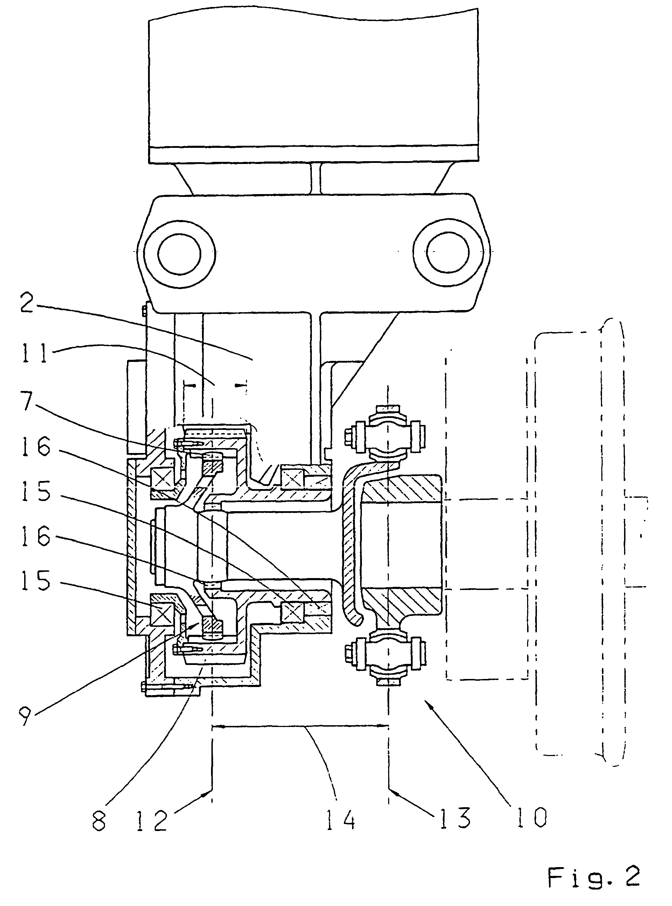

Gemäß Fig. 2 ist im Bereich des Abtriebszahnrades 8 des Getriebes 2 und in dessen Schmierölkreislauf ein erster Teil 9 eines Kupplungssystems in Form einer Bogenzahnkupplung 7 und zwischen dem Getriebe 2 und dem Radsatz 4, 5 ein abtriebsseitiger zweiter Teil 10 des Kupplungssystems vorgesehen, wobei der zweite Teil des Kupplungssystems bevorzugterweise gummielastisch ausgebildet ist. Die erfindungsgemäße Konstruktion basiert, wie bereits erläutert, auf der Tatsache, dass der notwendige Bauraum für die Integration des ersten Teiles 9 des Kupplungssystems aufgrund der Breite 11 des Zahnrades vorhanden ist. Die Konstruktion resultiert in einem kardanisch wirkenden Kupplungssystem mit entsprechendem Abstand 14 der beiden Kupplungsebenen 12, 13 und somit entsprechender Verlagerungsfähigkeit der Achse zum Getriebe 2. Die Wälzlager und die Abdichtung des Systems sind mit 15 bzw. 16 bezeichnet.

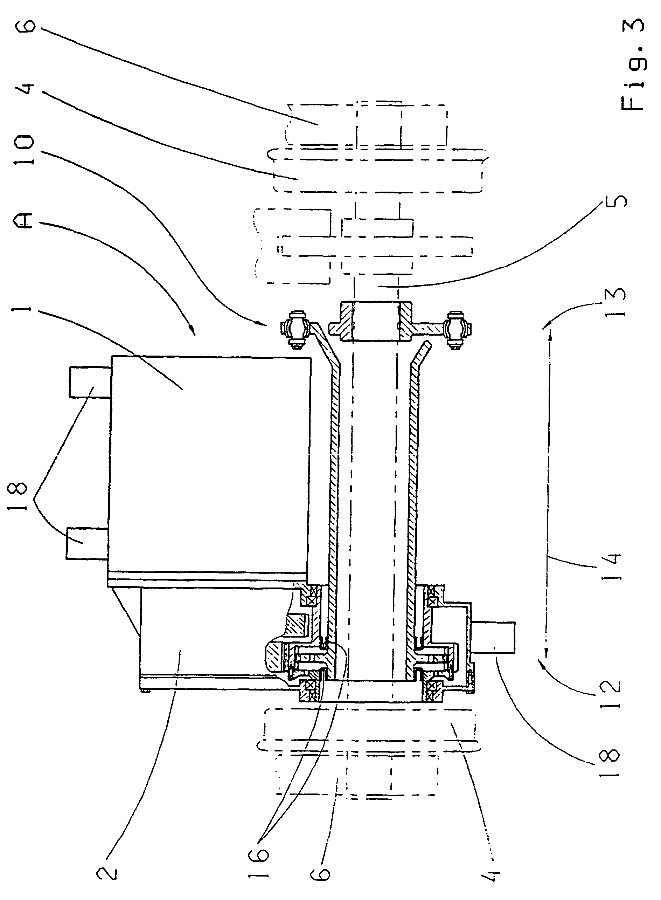

Fig. 3 zeigt eine weitere Ausführungsform gemäß der vorliegenden Erfindung, bei der die Antriebseinheit A innerhalb der Räder 4 angeordnet ist. Auch in diesem Fall ist im Bereich des Abtriebszahnrades 8 des Getriebes 2 und in dessen Schmierölkreislauf ein erster Teil 9 eines Kupplungssystems in Form einer Bogenzahnkupplung 7 vorgesehen. Abtriebsseitig ist zwischen der Hohlwelle 17 und dem Radsatz 4, 5 ein abtriebsseitiger zweiter Teil 10 des Kupplungssystems vorgesehen.

### Bezugszeichen

- 1: Elektromotor
- 2: Getriebe
- 3: Kupplung
- 4: Treibrad
- 5: Radsatzwelle
- 6: Drehgestell (Fahrwerk, Fahrzeugrahmen)
- 7: Bogenzahnkupplung (Kupplungsverzahnung)
- 8: Abtriebszahnrad
- 9: erster Teil der Kupplung
- 10: zweiter Teil der Kupplung
- 11: Breite des Abtriebszahnrades
- 12: Kupplungsebene 1
- 13: Kupplungsebene 2
- 14: Abstand der Kupplungsebenen
- 15: Wälzlager
- 16: Abdichtung
- 17: Hohlwelle
- 18: Befestigung zum Drehgestell

- A: Antriebseinheit

## Patentansprüche

1. Antriebseinheit (A) für Schienenfahrzeuge, mit einem am Fahrzeugrahmen oder am Fahrwerk aufgehängten Elektromotor (1), einem Getriebe (2) und einem kardanisch wirkenden Kupplungssystem (3), wobei das Kupplungssystem zwischen einer Radsatzwelle (5) und dem Getriebe (2) angeordnet ist, **dadurch gekennzeichnet, dass** ein erster Teil (9) des Kupplungssystems in Form einer Bogenzahnkupplung in das Abtriebszahnrad (8) des Getriebes und in dessen Schmierölkreislauf integriert ist und dass zwischen Getriebe und Radsatz ein abtriebsseitiger zweiter Teil (10) des Kupplungssystems vorgesehen ist.

2. Antriebseinheit nach Anspruch 1, **dadurch gekennzeichnet, dass** der zweite Teil (10) des Kupplungssystems eine gummielastische Kupplung ist.

3. Antriebseinheit nach Anspruch 1 oder 2, **dadurch gekennzeichnet, dass** die Antriebseinheit (A) an der Außenseite des Radsatzes angeordnet ist.

4. Antriebseinheit nach Anspruch 1 oder 2, **dadurch gekennzeichnet, dass** die Antriebseinheit an der Innenseite des Radsatzes zwischen den Treibrädern angeordnet ist.

## Claims

1. Drive unit (A) for railway vehicles, with an electric motor (1) suspended from the vehicle frame or from the running gear, a transmission (2) and a universally acting coupling system (3), wherein the coupling system is disposed between an axle (5) and the transmission (2) , **characterised in that** a first part (9) of the coupling system in the form of a curved teeth coupling is integrated into the driven gear wheel (8) of the transmission and into the lubricating oil circuit thereof, and that a second part (10), on the driven side, of the coupling system is provided between the transmission and the wheel set.

2. Drive unit according to Claim 1, **characterised in that** the second part (10) of the coupling system is an elastomeric coupling.

3. Drive unit according to Claim 1 or 2, **characterised in that** the drive unit (A) is disposed on the outside of the wheel set.

4. Drive unit according to Claim 1 or 2, **characterised in that** the drive unit is disposed on the inside of the wheel set between the driving wheels.

## Revendications

1. Unité de transmission (A) pour véhicules ferroviaires dotée d'un moteur électrique (1 ) suspendu sur le châssis ou sur le cadre du véhicule, d'un réducteur (2) et d'un système d'accouplement à cardan (3), sachant que le système d'accouplement est disposé entre l'arbre d'essieu (5) et le réducteur (2), **caractérisée en ce qu'**une première partie (9) du système d'accouplement est intégrée sous forme d'un accouplement à dents courbées dans le pignon de sortie (8) du réducteur et dans son circuit de lubrification et **en ce que** entre le réducteur et l'essieu monté est prévue, côté sortie, une deuxième partie (10) du système d'accouplement.

2. Unité de transmission selon la revendication 1, **caractérisée en ce que** la deuxième partie (10) du système d'accouplement est un accouplement en caoutchouc élastique.

3. Unité de transmission selon la revendication 1 ou 2, **caractérisée en ce que** l'unité de transmission (A) est disposée sur la face externe de l'essieu monté.

4. Unité de transmission selon la revendication 1 ou 2, **caractérisée en ce que** l'unité de transmission est disposée sur la face interne de l'essieu monté et entre les roues motrices.
